# EUROPEAN PATENT APPLICATION

(11) **EP 4 749 528 A1**
(43) Date of publication of application: **27.05.2026**
(21) Application number: 25217194.7
(22) Date of filing: 20.11.2025
(51) Int. Cl.: G06N 3/063, G06F 12/0862, G06N 3/08

(54) **OPTIMIZATION METHOD FOR DEEP LEARNING, HOST DEVICE AND PNM DEVICE**

(30) Priority: 21.11.2024 CN 202411675820
(71) Applicant: Samsung Electronics Co., Ltd., Suwon-si, Gyeonggi-do 16677 (KR)
(72) Inventor: YANG, Anzhe, Suwon-si, Gyeonggi-do 16677 (KR); YANG, Pan, Suwon-si, Gyeonggi-do 16677 (KR); HAM, Jihun, Suwon-si, Gyeonggi-do 16677 (KR); LEE, Nakwon, Suwon-si, Gyeonggi-do 16677 (KR); CHO, Sung-Hyun, Suwon-si, Gyeonggi-do 16677 (KR)
(74) Representative: Kuhnen & Wacker Patent- und Rechtsanwaltsbüro PartG mbB

(57) **Abstract**

An optimization method for deep learning, including: loading a current batch of data from a processing near memory, PNM, memory (321) included in a PNM device (320) for deep learning training in each epoch of the deep learning training to obtain a current training result, wherein the current training result includes at least one of a loss value or a confidence score corresponding to each piece of data included in the current batch of data; and transferring the current training result to the PNM device (320), wherein the current batch of data is prefetched by the PNM memory (321) from a PNM storage that is included in the PNM device (320) or from an external storage that is external to the PNM device (320).

## Description

### Technical Field

The present disclosure relates to artificial intelligence acceleration and computer storage, and more specifically, to an optimization method for deep learning, a host device, and a processing near memory (PNM) device.

### Background Art

Training of deep learning (DL) may use a large amount of training data (TB level), and all data cannot be stored in a memory of a host device (which may be referred to as a host) or a graphics processing unit (GPU). Therefore, such data may be acquired in batches from a storage, such as a solid-state drive (SSD). An important issue may be loading a next batch of data for training from a storage to a memory in a timely manner. The training process may use a plurality of iterations, so that data may be repeatedly loaded for training. To avoid learning the same data sequence, a batch of training data may be selected randomly in each iteration. Therefore, for each epoch, the host may first disorder, reorder, or randomize an identifier (ID) sequence of a dataset, and then load each batch of data in the new order. Although all data may be generally loaded once per epoch during the training, the contribution of different data to the training may vary. Low-quality data which are trained excessively may not effectively reduce a loss value, thereby affecting training efficiency. Moreover, compared to a computing speed of a GPU, an SSD may have a lower input/output (I/O) performance, and the I/O performance between the memory and the storage may affect the efficiency of training.

In order to optimize the I/O performance, a DeepMemoryDL scheme may use Compute Express Link (CXL) to provide an additional memory and a fast temporary storage space for DL workloads in order to reduce overall training time. Managing allocation of the additional CXL-based memory may introduce a fast intermediate storage layer, and provide an intelligent prefetching and caching mechanism for the DL workloads. The prefetching mechanism may ensure that each training batch is loaded into the memory before the next training iteration is ready to execute in order to reduce I/O time. However, although the DeepMemoryDL may improve I/O efficiency, it may only utilize CXL characteristics to prefetch the next batch of data and load it into the memory without improving training performance or fundamentally reducing useless training data.

In addition, there may be significant losses (e.g., high loss values) between outputs of some samples and targets during the training process, and these samples may be referred to as hard samples (which may also be referred to as hard-to-learn samples or hard sample data). The hard samples may contribute more to improving an accuracy of a deep learning model. In order to better utilize the hard samples, an Online Hard Example Mining (OHEM) scheme may sort misclassified samples as the hard samples and performs the training more times than easy samples (which may also be referred to as ordinary samples, easy-to-learn samples, or easy sample data), similar to spending more time practicing skills that have not yet been mastered. Training more hard samples may help to improve the accuracy of a model, but may also prolong the training time, and there may still be an I/O bottleneck when the amount of the training data is large. Therefore, this method may simply increase the training times of the hard samples without improving the training efficiency.

### SUMMARY

Provided is an optimization method capable of optimizing sample caching.

Also provided is an optimization method capable of reducing training time.

Also provided is an optimization method capable of efficiently improving sample quality in a later stage of training and improving training performance.

Additional aspects will be set forth in part in the description which follows and, in part, will be apparent from the description, or may be learned by practice of the presented embodiments.

In accordance with an aspect of the disclosure, an optimization method for deep learning includes: loading a current batch of data from a processing near memory (PNM) memory included in a PNM device for deep learning training in each epoch of the deep learning training to obtain a current training result, wherein the current training result includes at least one of a loss value or a confidence score corresponding to each piece of data included in the current batch of data; and transferring the current training result to the PNM device, wherein the current batch of data is prefetched by the PNM memory from a PNM storage that is included in the PNM device or from an external storage that is external to the PNM device.

In accordance with an aspect of the disclosure, an optimization method for deep learning includes: receiving a prefetch command request from a host device; and based on receiving the prefetch command request, prefetching data from a PNM storage included in a PNM device or from an external storage that is external to the PNM device.

In accordance with an aspect of the disclosure, an optimization method for deep learning includes: prefetching data from a PNM storage included in a PNM device or an external storage that is external to the PNM device; loading a current batch of data from a PNM memory for deep learning training in each epoch of the deep learning training to obtain a current training result, wherein the current training result includes at least one of a loss value or a confidence score corresponding to each piece of data included in the current batch of data; and generating a first sample set in the PNM memory or updating the first sample set in the PNM memory according to the current training result.

In accordance with an aspect of the disclosure, a host device for deep learning includes: at least one processor; and a storage unit storing instructions, which, when executed by the at least one processor, causes the host device to: load a current batch of data from a PNM memory of a PNM device for deep learning training in each epoch of the deep learning training to obtain a current training result, wherein the current training result includes at least one of a loss value or a confidence score corresponding to each piece of data included in the current batch of data; and transfer the current training result to the PNM device, wherein the current batch of data includes data prefetched by the PNM memory from a PNM storage that is included in the PNM device or from an external storage that is external to the PNM device.

In accordance with an aspect of the disclosure, a PNM device for deep learning includes: a PNM memory configured to prefetch data from a PNM storage or from an external storage that is external to the PNM device; an update sample module configured to generate or update a first sample set included in the PNM memory according to a current training result, wherein the current training result includes at least one of a loss value or a confidence score corresponding to each piece of data included in a current batch of data, and is obtained by performing deep learning training with respect to the current batch of data; and an adaptive sample allocation module configured to determine proportions of first sample data and second sample data in a next batch of data to be trained, wherein the first sample data is harder to learn than the second sample data, and wherein the first sample data is obtained from the prefetched data in the PNM memory, and the second sample data is obtained from the first sample set.

In accordance with an aspect of the disclosure, a PNM device for deep learning includes: a memory configured to store a plurality of batch of data for deep learning training; and a compute core configured to receive at least one of a loss value or a confidence score corresponding to each piece of current batch of data obtained by performing a deep learning training with respect to the plurality of batch of data, determine a first sample data and a second sample data among pieces of data of the plurality of batch of data in the memory and generate a plurality of next batch of data for the deep learning training based on proportions of the first sample data and the second sample data in the plurality of batch of data.

In accordance with an aspect of the disclosure, the compute core includes: an update sample module configured to generate or update a first sample data and a second sample data among the plurality of batch of data in the memory according to the deep learning training result; and an adaptive sample allocation module configured to determine a proportion of the first sample data and second sample data in a next batch of data for the deep learning training, wherein the first sample data is harder to learn than the second sample data.

In accordance with an aspect of the disclosure, the compute core is configured to save the first sample data and the second sample data in the memory and mark the second data as cleared.

In accordance with an aspect of the disclosure, a computer system includes: a PNM device for performing deep learning training; and a host device comprising at least one processor configured to: load a current batch of data from a PNM memory of the PNM device in each epoch of the deep learning training to obtain a current training result, wherein the current training result includes at least one of a loss value or a confidence score corresponding to each piece of data included in the current batch of data; and transfer the current training result to the PNM device, wherein the current batch of data includes data prefetched by the PNM memory from a PNM storage that is included in the PNM device, or from an external storage that is external to the PNM device.

### BRIEF DESCRIPTION OF THE DRAWINGS

The above and other aspects, features, and advantages of certain embodiments of the present disclosure will be more apparent from the following description taken in conjunction with the accompanying drawings in which:
FIG. 1 is a flowchart illustrating an optimization method according to embodiments of the present disclosure;
FIG. 2 is a flowchart illustrating an optimization method according to embodiments of the present disclosure;
FIG. 3 is a block diagram illustrating a data reading process according to a comparative example, and a data loading process according to embodiments of the present disclosure;
FIG. 4 is a block diagram illustrating a computer system according to embodiments of the present disclosure;
FIG. 5 is a flowchart illustrating an optimization method according to embodiments of the present disclosure;
FIG. 6 is a flowchart illustrating an optimization method according to embodiments of the present disclosure;
FIG. 7 is a flowchart illustrating an optimization method according to embodiments of the present disclosure;
FIG. 8 is a schematic diagram illustrating a selection manner of an (n+1)-th batch of data, according to embodiments of the present disclosure;
FIG. 9 is a flowchart illustrating an optimization method according to embodiments of the present disclosure; and
FIG. 10 is a block diagram illustrating a host device and a processing near memory (PNM) device according to embodiments of the present disclosure.

### Detailed Description of Exemplary Embodiments

Example embodiments of the present disclosure are referred to in detail, and examples of the embodiments are shown in the drawings, wherein like reference numbers indicate the like components. The embodiments will be explained by referring to the drawings, to explain the present disclosure.

The following detailed description is provided to assist in gaining a comprehensive understanding of the methods, devices and/or systems described herein. However, the sequences of operations described herein are merely examples, and are not limited to those set forth herein, but may be changed as will be apparent after an understanding of the present disclosure, unless explicitly described as necessarily occurring in a certain order. Also, descriptions of certain features may be omitted for increased clarity and conciseness.

The sequences of operations described herein are merely examples, and are not limited to those set forth herein, but may be substituted or changed equivalently, with the exception of operations which are explicitly described as necessarily occurring in a certain order. In addition, for increased clarity and conciseness, descriptions of certain aspects may be omitted or simplified as appropriate.

Unless otherwise specified, the same drawing reference numerals generally refer to the same elements (e.g., component, step, and method). The reference numerals described in certain embodiments that appear again in subsequent embodiments may be omitted. In addition, technical features described in different or the same embodiment may be combined in any way, as long as the combined embodiment or technical solution is complete and can solve the technical problem of the present disclosure or achieve the technical effect described or apparent from the present disclosure.

Unless otherwise defined, all terms (including technical and scientific terms) used herein may have the same meanings as the meanings as commonly understood by one of ordinary skilled in the art to which the present disclosure belongs after understanding the present disclosure. Terms, such as those defined in commonly used dictionaries, may be interpreted as having a meaning that is consistent with their meaning in the context of the relevant art and/or the present disclosure, and should not be interpreted in an idealized or overly formal sense, unless expressly so defined herein.

Processing near memory (PNM) may refer to a technique for integrating a storage and a logic chip into an advanced integrated circuit package, which may perform data computing using the storage to reduce data movement between a central processing unit (CPU) and the storage. Using the PNM, computing functions may be executed closer to a memory, thereby reducing a bottleneck in data transfer between the CPU and the memory.

Compute Express Link (CXL) may refer an open standard for a high-speed and high-capacity connection between a processor and a memory. A CXL memory expansion technology may allow a server to expand memory capacity to dozens of TB while increasing bandwidth to hundreds of GB per second.

CXL-PNM may refer to an advanced technology that may reduce data movement between a CPU and a memory. By placing a processing unit closer to the memory, the CXL-PNM technology may, for example, double a loading speed and quadruple a capacity of an artificial intelligence (AI) model.

Deep learning training may be I/O-intensive because it may use continuous acquisition of data samples from a remote storage (e.g. a solid-state drive (SSD)). As accelerators become more powerful and require more data, I/O performance may fall behind. In addition, research results indicate that not all data samples may be equally important, and different data samples may contribute differently to improving a model accuracy. Therefore, actively prefetching and caching training data may be important. In addition, reasonably selecting proportions of hard samples and easy samples within the batch may be helpful to reduce the number of iterations in model training and improve an accuracy of a deep learning model.

The present disclosure provides an optimization method for deep learning, specifically by placing a plurality of training data to be trained into a PNM memory in advance, so that the data may be loaded into a host at a high speed using a CXL memory protocol CXL.mem. By using the hard samples (which may also be referred to as hard-to-learn sample data or hard sample data) in a reasonable manner, training efficiency may be improved. For example, the hard samples and the easy samples (which may also be referred to as easy-to-learn sample data, ordinary samples, or easy sample data) may be mixed together to generate the next batch of data to be trained, so that proportions of hard-to-learn sample data and easy-to-learn sample data within a batch may be dynamically adjusted according to the training process of the host. Below, a detailed description of the embodiments of the present disclosure is provided in conjunction with the accompanying drawings.

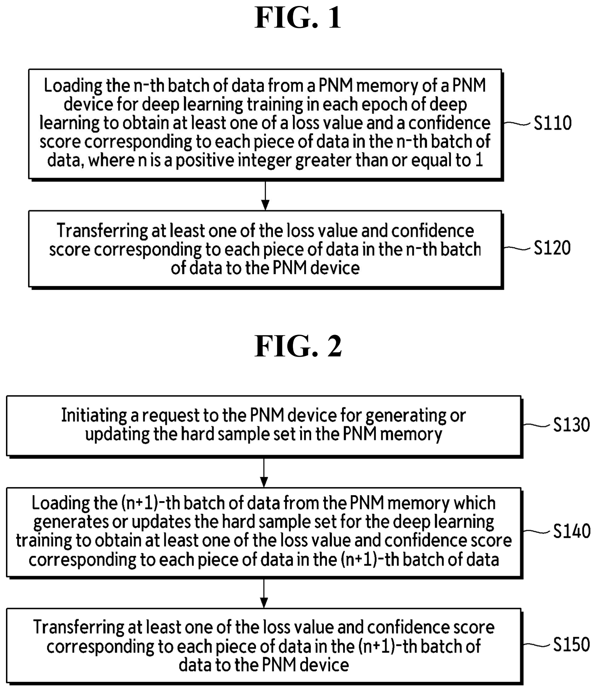

FIG. 1 is a flowchart illustrating an optimization method according to a first embodiment of the present disclosure.

The optimization method according to the first embodiment of the present disclosure may be executed by a host or a host device. The host device may include a CPU, a graphics processing unit (GPU), etc. The optimization method according to embodiments of the present disclosure may include operation S110 and operation S120.

At operation S110, the n-th batch of data may be loaded from a PNM memory of a PNM device for deep learning training in each epoch of deep learning training to obtain an n-th training result, which may include at least one of a loss value or a confidence score corresponding to each piece of data in the n-th batch of data, where n is a positive integer greater than or equal to 1. Here, every data in a batch of data may have its own label value, and the loss value may be the difference between a label value of the data in the batch of data before a training process and an evaluated value of the data after the training process. A sample in a data in a batch of data may have a feature and a label value. Confidence score may be a floating point number between 0 and 1 indicating the probability of a category corresponding to a prediction result. And in the classification process in the machine learning algorithm, a sample data has a corresponding category.

In embodiments, the n-th batch of data may be referred to as a current batch of data, and the n-th training result may be referred to as a current training result. The deep learning training may be used to train various neural network models such as a back propagation algorithm, a convolutional neural network, a recurrent neural network, and a generative adversarial network, etc. As long as a batch of data is loaded from the PNM device, it may reduce training time and improve an I/O bottleneck and the like.

The total number of epochs and batch size (e.g., the number of pieces of data or amount of data per epoch) for the deep learning may be pre-set as required. During the deep learning training, it may be necessary to load data in a dataset stored in a storage in batches. The total number of batches may be determined based on total amount of data in the dataset and the batch size. As an example, n may be greater than or equal to one ("1") and less than or equal to a ratio of the total amount of data in the dataset to the batch size.

At least one of the loss value and the confidence score corresponding to each piece of data in each batch may be determined according to a value returned by the deep learning training. For example, the loss value and the confidence score may be obtained according to any calculation methods for performing deep learning training.

In each epoch, the same batch size and loading method (e.g., loaded from the PNM memory) may be used for the deep learning training. However, in different epochs, the data loaded in each batch may be different, and proportions of hard-to-learn sample data and easy-to-learn sample data in the data loaded in each batch may be different.

At operation S120, at least one of the loss value or the confidence score corresponding to each piece of data in the n-th batch of data (e.g., the n-th training result or current training result) may be transferred to the PNM device. As an example, an update data agent in the host device (e.g., a software module in the CPU of the host device) may communicate with a compute core in the PNM device, thereby transferring the loss value or the confidence score corresponding to each batch of data to the compute core in the PNM device.

In some embodiments, the optimization method according to embodiments of the present disclosure may further include: initiating a prefetch command to the PNM device at preset time intervals. In embodiments, the prefetch command may be used to command the PNM memory to prefetch data from a PNM storage or an external storage that is external to the PNM device.

The host device may transmit the prefetch command to the PNM device before starting training, so that the PNM memory may prefetch the data from the PNM storage included in the PNM device or the external storage that is external to the PNM device. The amount or number of the prefetched data may be greater than the amount of data of each batch, (e.g., the amount or number of the prefetched data may be greater than the batch size). As an example, a plurality of batches of data (for example, at least two batches of data) may be prefetched. The amount of the prefetched data may be determined according to capacity of the PNM memory, and the larger the capacity of the PNM memory, the larger the amount of the prefetched data may be. For example, if there are one hundred images stored in the storage, the PNM memory may prefetch twenty images therefrom, and each batch may include five images (e.g., loading five images each time).

In addition, the host device may initiate a prefetch request to the PNM device after training of the n-th batch of data is completed. The PNM memory of the PNM device may prefetch data from the PNM storage or other storage according to the request, and the amount of data prefetched each time may be the same or different.

When n=1, the first batch of data may be loaded from the PNM memory of the PNM device for the deep learning training to obtain at least one of the loss value or the confidence score corresponding to each piece of data in the first batch of data. A hard sample set may be generated or updated according to at least one of the loss value or the confidence score corresponding to each piece of data in the first batch of data. In some embodiments, the hard sample set may be referred to as a first sample set. A sample set may be a selected batch of data. Assuming that the first batch of data includes five pieces of data (e.g. five images), and the first piece of data (e.g. the first image) and the second piece of data (e.g. the second image) are determined to be hard samples (e.g., data corresponding to higher loss values) according to their corresponding loss values or confidence scores, these two hard samples may be added to the hard sample set in the PNM memory (an example of which is described in more detail below). In some embodiments, there may be no hard sample set in the PNM memory, or the hard sample set may be empty. The hard sample set may be generated or updated as the deep learning training progresses.

FIG. 2 is a flowchart illustrating an optimization method according to the first embodiment of the present disclosure.

The optimization method according to the first embodiment of the present disclosure illustrated in FIG. 2 may also be executed by the host device, and the optimization method according to the first embodiment of the present disclosure may further include operations S130, S140 and S150.

At operation S130, before the (n+1)-th batch of data is loaded for the deep learning training, a request may be initiated to the PNM device for generating the hard sample set in the PNM memory or updating the hard sample set in the PNM memory, wherein the hard sample set is generated or updated based on at least one of the loss value or the confidence score corresponding to each piece of data in the n-th batch of data. In embodiments, the (n+1)th batch of data may be referred to as a next batch of data.

For example, based on the n-th batch of data being a first batch of data, before the second batch of data is loaded for the deep learning training, the request may be initiated to the PNM device for generating the hard sample set in the PNM memory or updating the hard sample set in the PNM memory.

At operation S140, the (n+1)-th batch of data is loaded from the PNM memory which generates or updates the hard sample set for the deep learning training to obtain at least one of the loss value or the confidence score corresponding to each piece of data in the (n+1)-th batch of data.

Similarly, after the last batch of data is loaded, at least one of the loss value or the confidence score returned by the deep learning training may still be returned to the PNM device, but this is only an example.

At operation S150, at least one of the loss value or the confidence score corresponding to each piece of data in the (n+1)-th batch of data is transferred to the PNM device.

The (n+1)-th batch of data may include the hard samples (e.g, the hard-to-learn sample data) included in the hard sample set and easy samples (e.g., easy-to-learn sample data) that the PNM memory may prefetch from the PNM storage included in the PNM device or the external storage that is external to the PNM device. In embodiments, the hard samples may be referred to as first sample data, and the easy samples may be referred to as second sample data.

According to embodiments, the total number of batches may be determined based on the ratio of the total amount of sample data to the batch size. For example, if there are one hundred images stored in the storage, and each batch includes five images (e.g., five images are loaded each time), the total number of batches may be twenty, and the last batch of data may be the twentieth batch of data. The above method of determining the number of batches is also exemplary. The total number of batches may be greater than twenty. For example, in a certain epoch, there may be twenty images in the hard sample set, the total amount of data may be one hundred and twenty, and the number of batches may be twenty-four. The data in the hard sample set may still be determined to be hard samples after training, thus, for each epoch, the data in the hard sample set may be trained many times, resulting in more batches.

For example, in embodiments of the present disclosure, all data may be loaded in batches into the host (e.g. a neural network model running in the GPU of the host) in each epoch. However, considering that the second batch and each subsequent batch of data may include the hard-to-learn sample data, the total amount of data loaded in each epoch may be greater than the total number of the samples stored in the storage, but this is only an example, and the total amount of data loaded in each epoch may be equal to the total number of the samples stored in the storage (in each epoch, there may be some the easy-to-learn sample data that is not loaded into the host). For example, if the total amount of data stored in the storage is one hundred, and each batch includes five photos, the number of batches may be twenty. The data in the hard sample set may still be determined to be hard samples after training, but regardless of how many times the hard samples are learned (e.g. at least two times), the number of batches may be twenty, which may mean that some of the data stored in the storage is not loaded into the host for learning. This data may be limited, for example, not exceeding 10% of the total amount of data. Taking the total amount of data being one hundred as an example again, the amount of data that is not loaded for learning cannot exceed ten pieces of data.

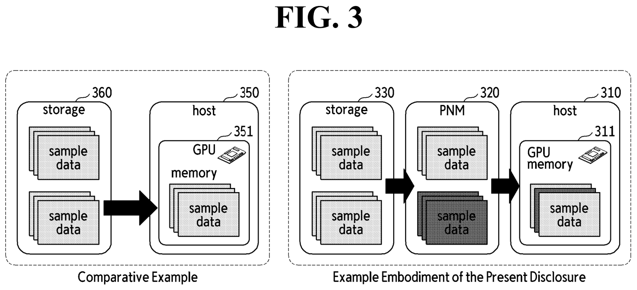

FIG. 3 is a block diagram illustrating a data reading process of prior art and a data loading process of the present disclosure.

Referring to FIG. 3, in the comparative example, a GPU memory 351 included in a host device 350 may read sample data to be trained from a storage 360 (such as an SSD), with a reading speed of only about 7 gigabits per second (Gb/s).

However, according an example embodiment of the present disclosure, a GPU memory 311 included in a host device 310 may prefetch a plurality of batches of data from a storage 330 using a memory of a PNM device 320, and the host device 310 may load the prefetched data in the memory of the PNM device 320 in batches, with a loading speed of up to 35Gb/s.

For example, according to the optimization method of embodiments of the present disclosure, data may be prefetched from a PNM storage or an external storage into a PNM memory, thereby enabling faster access to the data and eliminating I/O access to slower storage layers. In addition, when the data is loaded in batches for training in each epoch, the loaded data may be the prefetched data in the memory of the PNM device 320 and the hard-to-learn sample data selected from the dynamically adjusted hard sample set. As a result, it may be possible to reduce training time and improve the efficiency and accuracy of the deep learning. In addition, the sample quality may be improved and the training performance is optimized in the later stage of the deep learning training.

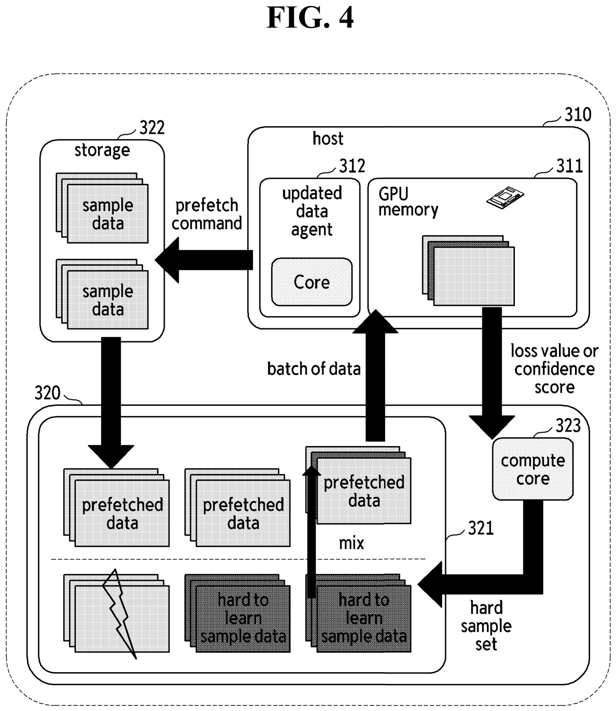

FIG. 4 is a block diagram illustrating a computer system of the present disclosure.

The computer system according to embodiments of the present disclosure may include a host 310 (or a host device) and/or a PNM device 320. The PNM device 320 may include a PNM memory 321, a PNM storage 322 and a control module (including for example a compute core 323). The storage illustrated in FIG. 4 may be integrated with the PNM memory 321, which may mean for example that the PNM storage 322 illustrated in FIG. 4 is a part of the PNM device 320. However, this is only an example, and the storage may also be an external storage that is external to the PNM device 320 (e.g., the storage 330 of FIG. 3).

Referring to FIG. 4, an update data agent 312 included in the host 310 (e.g., a software module of a CPU of the host) may communicate with the PNM device, for example by communicating with the compute core 323 of the PNM device, transfer a loss value and/or a confidence score returned by deep learning training, and transmit a command for prefetching the next batch of samples to the PNM device 320. After performing forward propagation calculation in the GPU, the update data agent 312 may transfer the calculated loss value and the like to the compute core of the PNM device 320 and initiate a request for updating a hard sample set. Afterwards, the PNM device 320 may prefetch randomly arranged samples and store them in the PNM memory 321 according to the request, and update the hard sample set.

The compute core 323 of the PNM device 320 may check whether a sample is a hard sample or an easy sample, and may update the hard sample set. In addition, the compute core 323 may further determine proportions of hard-to-learn sample data and easy-to-learn sample data within the next batch. For example, a plurality of batches of samples (e.g., ordinary samples or easy-to-learn samples) and hard samples may be stored in the PNM memory 321 of the PNM device 320. When the host 310 requests the next batch of samples, the PNM memory 321 of the PNM device 320 may prepare the next batch of samples. Examples of specific execution steps of the PNM device 320 are explained later.

As the number of iterations increases, an ability of a deep learning model may become stronger, and many samples may become easy-to-learn samples and may be more easily classified by the deep learning models, resulting in gradients in backpropagation mainly based on loss of easy samples. Therefore, the compute core 323 of the PNM device 320 may check whether the sample is a hard sample or an easy sample, and may update the current hard sample set.

In an initial stage of training, a plurality of batches of data may be prefetched and cached in the PNM memory 321. Then, when the host device 310 requests the next batch of data, the compute core 323 may determine whether the samples are the hard-to-learn samples. If so, they may be saved in the PNM memory 321; if not, they may be marked as cleared, and when space in the PNM memory 321 is insufficient, newly prefetched samples may replace these samples marked as cleared.

For, the proportions of the hard-to-learn sample data and the easy-to-learn sample data in the (n+1)-th batch of data may be determined according to at least one of the loss value or the confidence score corresponding to each piece of data in the n-th batch of data (e.g., the n-th training result or current training result), a batch size of deep learning, and the total number of epochs of the deep learning. For example, the term 'determine' here may refer to determining or selecting a specific proportion value, but this is only an example. The term 'determine' here may also refer to adjusting the proportions of the hard-to-learn sample data and the easy-to-learn sample data.

It According to embodiments, all prefetched data may be easy data (e.g., easy-to-learn data or ordinary data), but this is only an example. For example, the prefetched data may be classified into hard-to-learn data and easy-to-learn data according to past experience before learning, and the prefetched hard-to-learn data may be stored in the hard sample set.

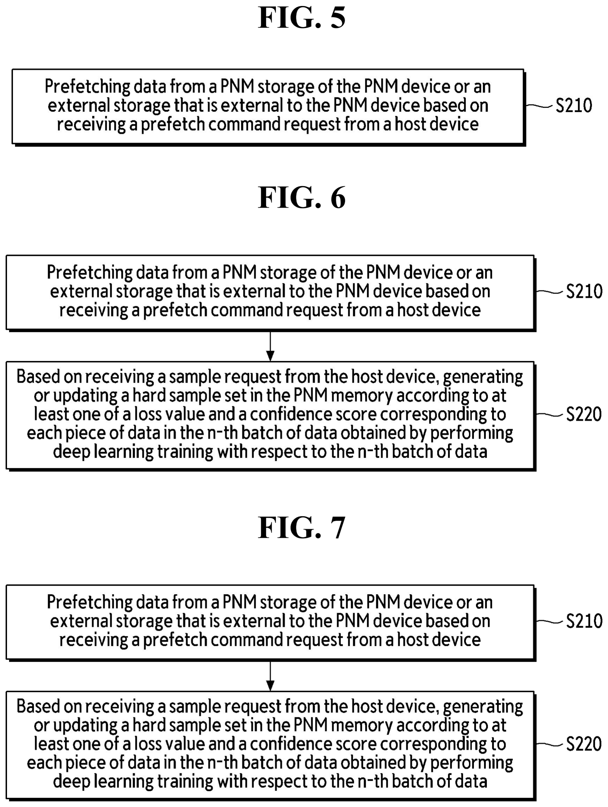

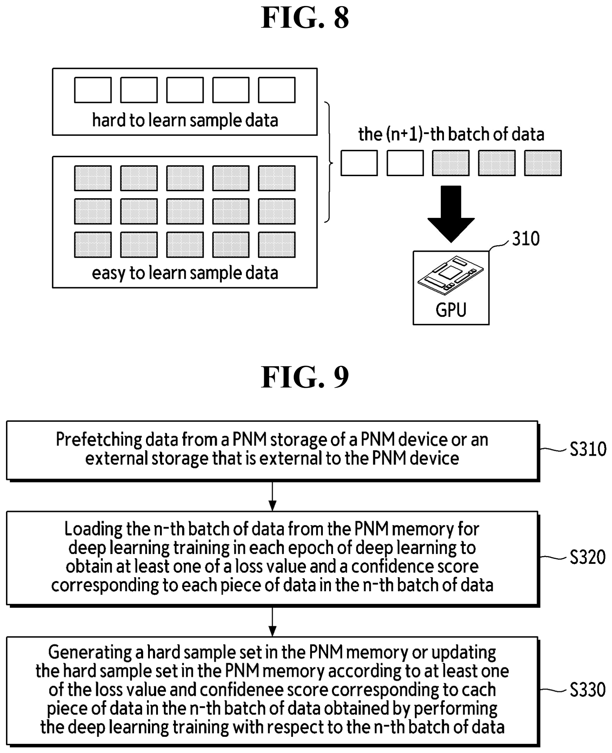

FIGS. 5-7 are flowcharts illustrating an optimization method according to a second embodiment of the present disclosure. FIG. 8 is a schematic diagram illustrating a selection manner of the (n+1)-th batch of data.

The optimization method according to the second embodiment of the present disclosure may be executed by a PNM device.

Referring to FIG. 5, the optimization method according to the second embodiment of the present disclosure may include operation S210.

At operation S210, data may be prefetched from a PNM storage included in the PNM device or an external storage that is external to the PNM device in response to a prefetch command request from a host device. In embodiments, the PNM device may correspond to the PNM device 320 discussed above, and the PNM storage may correspond to the PNM storage 330 or the PNM storage 322 discussed above. The PNM device of the present disclosure may be a CXL-PNM device.

The prefetch command request as described above may be initiated to the PNM device at preset time intervals, but this is only an example. In the case where capacity of the PNM memory is sufficient, all data may be prefetched at once. In embodiments, the PNM memory may correspond to the PNM memory 321 discussed above. As an example, in the case where data needs to be prefetched for many times, the amount of data prefetched each time may be different or the same. When prefetching data, the total data in the PNM memory may always be kept unchanged, for example, 80% of the capacity of the PNM memory may always be used.

Referring to FIG. 6, in addition to operation S210, which may be similar to the operation S210 described above, the optimization method according to the second embodiment of the present disclosure may further include operation S220.

At operation S220, in response to a sample request from the host device, a hard sample set in the PNM memory may be generated or updated according to at least one of a loss value or a confidence score corresponding to each piece of data in the n-th batch of data (e.g., the n-th training result or current training result) obtained by performing deep learning training with respect to the n-th batch of data, where n may be a positive integer greater than or equal to one ("1"), and n may be less than or equal to a ratio of total amount of data to a batch size. Due to the presence of hard-to-learn sample data, n may also be greater than the ratio of the total amount of data to the batch size.

Referring to FIG. 7, in addition to operations S210 and S220, which may be similar to the operations S210 and S220 described above, the optimization method according to the second embodiment of the present disclosure may further include operation S230.

At operation S230, proportions of the hard-to-learn sample data and easy-to-learn sample data within the (n+1)-th batch of data to be trained (e.g., the next batch of data) may be determined, wherein the easy-to-learn sample data in the (n+1)-th batch of data to be trained may be obtained from the data in the prefetched data in the PNM memory, except for the data corresponding to the determined hard-to-learn sample data, and the hard-to-learn sample data in the (n+1)-th batch of data to be trained may be obtained from the hard sample set.

Referring to FIG. 8, an example is illustrated in which the batch size is five, the hard-to-learn sample data in the hard sample set is five, and the prefetched easy-to-learn sample data is fifteen (excluding data marked as cleared, or data marked as cleared being covered), after learning the n-th batch of data, it may be determined that the proportion of the hard-to-learn sample data within the (n+1)-th batch is two fifths, and the proportion of the easy-to-learn sample data within the (n+1)-th batch is three fifths, respectively), which may mean that the (n+1)-th batch of data includes two pieces of hard-to-learn sample data (e.g. two hard samples) and three pieces of easy-to-learn sample data (e.g., three hard samples), and the two hard samples may be randomly selected from the hard sample set. Similarly, the three easy samples may also be randomly selected from the prefetched easy-to-learn data. In addition, as an example, each piece of data may be numbered and may be selected in the order of serial numbers during selection. In some embodiments, the proportion may be determined as a proportion between the hard samples and the easy samples within the batch. Accordingly, in the example described above, the proportion between the hard samples and the easy samples in the (n+1)-th batch may be determined as two to three.

As mentioned above, the proportions of the hard-to-learn sample data and the easy-to-learn sample data in the (n+1)-th batch of data to be trained (e.g., the next batch of data) may be determined according to at least one of the loss value or the confidence score corresponding to each piece of data in the n-th batch of data (e.g., the n-th training result or the current training result), the batch size of the deep learning, and the total number of epochs of the deep learning. A scale of the proportions of the hard-to-learn sample data and the easy-to-learn sample data in the next batch of training data may be specifically determined, which may mean that the numbers of the hard-to-learn sample data and the easy-to-learn sample data in the next batch of training data may be determined.

In addition, the determining of the proportions of the hard-to-learn sample data and the easy-to-learn sample data in the (n+1)-th batch of data to be trained may include: based on at least one of the loss value or the confidence score corresponding to each piece of data in the n-th batch of data satisfying a first condition, decreasing the proportion of the hard-to-learn sample data in the (n+1)-th batch of data to be trained and increasing the proportion of the easy-to-learn sample data in the (n+1)-th batch of data to be trained; and based on at least one of the loss value or the confidence score corresponding to each piece of data in the n-th batch satisfying a second condition, increasing the proportion of the hard-to-learn sample data in the (n+1)-th batch of data to be trained and decreasing the proportion of the easy-to-learn sample data in the (n+1)-th batch of data to be trained. In embodiments the first condition may be satisfied when the loss value for each piece of data in the n-th batch of data is greater than a first threshold or the confidence score for each piece of data in the n-th batch of data is less than a second threshold, and the second condition may be satisfied when the loss value for each piece of data in the n-th batch of data is less than or equal to the first threshold or the confidence score for each piece of data in the n-th batch of data is greater than or equal to the second threshold.

For example, if the loss value of the previous batch of data is relatively high (which may be caused by, for example, a classification error), the amount of easy-to-learn sample data in the next batch may increase, and the amount of hard-to-learn sample data may decrease. In contrast, if the loss value of the previous batch of data is relatively low, the amount of easy-to-learn sample data in the next batch may decrease, and the amount of hard-to-learn sample data may increase. As the number of iterations of training increases, the occurrence of classification errors may become less and less. Therefore, the amounts of hard-to-learn sample data and easy-to-learn sample data in a batch of data may tend to be similar in the later stage of training.

After the proportions of data are determined, the PNM device may allocate hard-to-learn samples and easy-to-learn samples proportionally. When the host 310 intends to load the next batch of data, the assembled data batch may be returned from the PNM memory to the host 310 (or for example a GPU included in the host 310), which may efficiently reduce reading time compared to randomly extracting samples from the storage device.

In some embodiments, the optimization method according to the second embodiment of the present disclosure may further include: before determining the (n+1)-the batch of data to be trained, marking the prefetched data in the PNM memory corresponding to the determined hard-to-learn sample data as cleared. Compared with clearing data directly in real-time, this may effectively reduce energy consumption by using newly prefetched data to overwrite the data marked as cleared subsequently.

FIG. 9 is a flow diagram illustrating an optimization method according to a third embodiment of the present disclosure.

Referring to FIG. 9, the optimization method according to the third embodiment of the present disclosure may include operations S310, S320 and S330.

At operation S310, data may be prefetched from a PNM storage included in a PNM device or an external storage external to the PNM device. In embodiments, the PNM device may correspond to the PNM device 320 discussed above, and the PNM storage may correspond to the PNM storage 330 or the PNM storage 322 discussed above. As an example, the data may be prefetched from the storage according to a prefetch data request of a host device. In embodiments, the host may correspond to the host 310 discussed above. An amount of data to be prefetched each time and the number of times of the prefetching may be determined according to the PNM memory.

At operation S320, the n-th batch of data (e.g., a current batch of data) may be loaded from the PNM memory for deep learning training in each epoch of the deep learning training to obtain at least one of a loss value or a confidence score corresponding to each piece of data in the n-th batch of data (e.g., an n-th training result or a current training result). The loss value or the confidence score here may be obtained using a current method.

At operation S330, a hard sample set may be generated in the PNM memory or the hard sample set in the PNM memory may be updated according to at least one of the loss value or the confidence score corresponding to each piece of data in the n-th batch of data (e.g., the n-th training result or the current training result) obtained by performing the deep learning training with respect to the n-th batch of data, where n is a positive integer greater than or equal to 1.

In addition, the optimization method according to the third embodiment of the present disclosure may further include: determining proportions of hard-to-learn sample data and easy-to-learn sample data in an (n+1)-th batch of data to be trained (e.g., a next batch of data), wherein the easy-to-learn sample data in the (n+1)-th batch of data to be trained comes from the data in the prefetched data in the PNM memory, except for the data corresponding to the determined hard-to-learn sample data, and the hard-to-learn sample data in the (n+1)-th batch of data to be trained comes from the hard sample set.

As mentioned above, the proportions of the hard-to-learn sample data and the easy-to-learn sample data in the (n+1)-th batch of data to be trained may be determined according to at least one of the loss value or the confidence score corresponding to each piece of data in the n-th batch of data (e.g., the n-th training result or the current training result), a batch size of the deep learning, and the total number of epochs of the deep learning.

The determining of the proportions of the hard-to-learn sample data and the easy-to-learn sample data in the (n+1)-th batch of data to be trained may include: based on at least one of the loss value or the confidence score corresponding to each piece of data in the n-th batch of data satisfying a first condition, decreasing the proportion of the hard-to-learn sample data in the (n+1)-th batch of data to be trained and increasing the proportion of the easy-to-learn sample data in the (n+1)-th batch of data to be trained; and based on at least one of the loss value or the confidence score corresponding to each piece of data in the n-th batch satisfying a second condition, increasing the proportion of the hard-to-learn sample data in the (n+1)-th batch of data to be trained and decreasing the proportion of the easy-to-learn sample data in the (n+1)-th batch of data to be trained. In embodiments the first condition may be satisfied based on the loss value for each piece of data in the n-th batch of data being greater than a first threshold or the confidence score for each piece of data in the n-th batch of data being less than the second threshold, and the second condition may be satisfied based on the loss value for each piece of data in the n-th batch of data being less than or equal to the first threshold or the confidence score for each piece of data in the n-th batch of data being greater than or equal to the second threshold. The first and second thresholds here are not specifically limited and may be adjusted as required.

The optimization method according to the third embodiment of the present disclosure may further include: loading the (n+1)-th batch of data (e.g., the next batch of data) from the PNM memory which generates or updates the hard sample set for the deep learning training to obtain at least one of the loss value or the confidence score corresponding to each piece of data in the (n+1)-th batch of data.

As mentioned above, before the (n+1)-the batch of data to be trained is determined or selected, the prefetched data in the PNM memory corresponding to the determined hard-to-learn sample data may be marked as cleared.

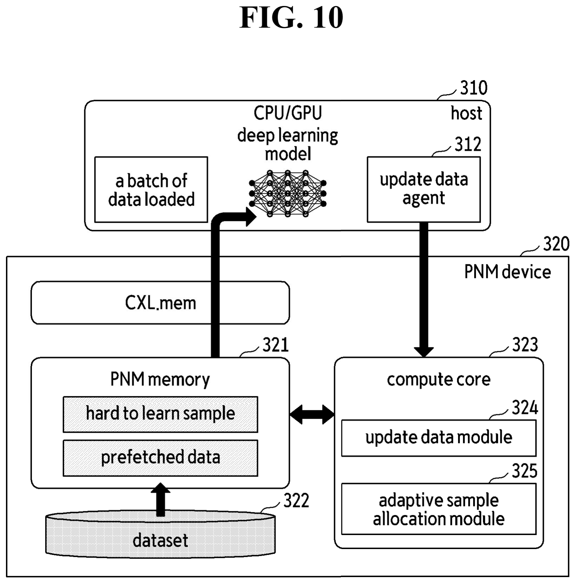

FIG. 10 is a block diagram illustrating a host device and a PNM device of the embodiments of the present disclosure.

According to embodiments of the present disclosure, the host device 310 may include a CPU and a GPU, etc. A PNM memory 321 of the PNM device 320 may prefetch data from a dataset of a storage 322, and an update data agent 312 may run in the CPU. The loaded batch of data may be input into a deep learning model for training, and the update data agent 312 may transfer a value returned by the training to the PNM device 320, for example, to a compute core 323 of the PNM device 320.

The host device 310 according to embodiments of the present disclosure may include a processing unit and a storage unit storing programs or instructions, which, when being executed by the processing unit, causes the processing unit to execute the above optimization method.

The PNM device 320 according to embodiments of the present disclosure may include the PNM memory 321, an update data module 324 (which may be referred to as an update hard sample (UHS) module) and an adaptive sample allocation module (ASA) 325.

The PNM memory 321 may prefetch data from a PNM storage 322 or an external storage that is external to the PNM device. For example, the PNM memory 321 may prefetch data at predetermined time intervals based on a request from the host device 310.

The update data module 324 may generate or update a hard sample set in the PNM memory 321 based on at least one of a loss value or a confidence score corresponding to each piece of data in the n-th batch of data (e.g., the n-th training result or current training result) obtained by performing deep learning training with respect to the n-th batch of data.

The ASA 325 may determine proportions of hard-to-learn sample data and easy-to-learn sample data in the (n+1)-th batch of data to be trained, wherein the easy-to-learn sample data in the (n+1)-th batch of data to be trained may be obtained from the data in the prefetched data in the PNM memory 321, except for the data corresponding to the determined hard-to-learn sample data, and the hard-to-learn sample data in the (n+1)-th batch of data to be trained may be obtained from the hard sample set.

The ASA module 325 may decrease the proportion of the hard-to-learn sample data in the (n+1)-th batch of data to be trained and increase the proportion of the easy-to-learn sample data in the (n+1)-th batch of data to be trained based on at least one of the loss value or the confidence score corresponding to each piece of data in the n-th batch of data (e.g., the n-th training result or current training result) satisfying a first condition; and increase the proportion of the hard-to-learn sample data in the (n+1)-th batch of data to be trained and decrease the proportion of the easy-to-learn sample data in the (n+1)-th batch of data to be trained based on at least one of the loss value or the confidence score corresponding to each piece of data in the n-th batch (e.g., the n-th training result or current training result) satisfying a second condition. In embodiments, the first condition may be satisfied based on the loss value for each piece of data in the n-th batch of data being greater than a first threshold or the confidence score for each piece of data in the n-th batch of data being less than a second threshold, and the second condition may be satisfied based on the loss value for each piece of data in the n-th batch of data being less than or equal to the first threshold or the confidence score for each piece of data in the n-th batch of data being greater than or equal to the second threshold.

According to embodiments, the ASA module 325 may, based on the loss value of the previous batch of data being relatively high (which may be caused by, for example, a classification error), increase the amount of easy-to-learn sample data in the next batch, and decrease the amount hard-to-learn sample data. In addition, based on the loss value of the previous batch of data being relatively low, the ASA module 325 may decrease the amount of the easy-to-learn sample data in the next batch, and increase the amount of the hard-to-learn sample data.

After the proportions of the hard-to-learn sample data and the easy-to-learn sample data are determined, the ASA module 325 may allocate hard-to-learn samples and easy-to-learn samples proportionally. When the host 310 intends to load the next batch of data, the assembled data batch may be returned from the PNM memory 321 to the host 310, which may efficiently reduce reading time compared to randomly extracting samples from the storage device.

In some embodiments, before the (n+1)-th batch of data (e.g, the next batch of data) to be trained is determined, the update data module 324 may mark the prefetched data in the PNM memory 321 corresponding to the determined hard sample data as cleared. Compared with clearing data directly in real-time, this may effectively reduce energy consumption by using newly prefetched data to overwrite the data marked as cleared subsequently.

Examples of the optimization method and the like according to exemplary embodiments of the present disclosure are described above with reference to FIGS. 1 to 10. However, it should be understood that the devices, units, equipment, etc. shown in the accompanying drawings may be configured as software, hardware, firmware, or any combination of the above to perform specific functions respectively. For example, these units and devices may correspond to application specific integrated circuits, pure software codes, or modules that combine software and hardware. In addition, one or more functions implemented by these systems or devices may also be uniformly executed by components in physical equipment such as processors, clients, or servers.

The instructions or programs corresponding to the optimization method of embodiments of the present disclosure may be stored in a computer-readable storage medium. The computer system according to embodiments of the present disclosure may include the above mentioned host device and/or the above mentioned PNM device (e.g., the CXL-PNM device).

The instructions stored in the computer-readable storage medium discussed above may run in environments deployed in computer devices such as clients, hosts, proxy devices, servers, etc. It should be noted that the above instructions may also be used to perform additional steps in addition to the above steps or to perform more specific processing when executing the above steps. The contents of these additional steps and further processing have already been mentioned in the description of the relevant devices and methods with reference to FIGS. 1 to 10, and thus will not be repeated here to avoid non-conciseness.

It should be noted that the optimization method according to exemplary embodiments of the present disclosure may completely depend on the execution of computer programs or instructions to achieve the corresponding functions, that is, each device corresponds to each step in the functional architecture of the computer program, so that the entire system is called through specialized software packages (such as a lib library) to achieve the corresponding functions.

Embodiments of the present disclosure may utilize a PNM characteristic of the PNM device to prefetch the data required for the deep learning training into the PNM memory in advance, and deploy the UHS and ASA modules in the PNM compute unit to effectively allocate the hard-to-learn samples, thereby improving the training efficiency and performance of the deep learning. In addition, embodiments of the present disclosure may improve the overall I/O throughput of CXL-PNM devices by prefetching the samples, and enhance the performance of the deep learning workloads by effectively utilizing the PNM memory and compute core to actively prefetch and cache the training data. According to embodiments, the optimization method of the present disclosure may reduce the training time, and may also effectively improve the sample quality in the later stage of the training and enhance the training performance.

The optimization method according to embodiments of the present disclosure may run in devices with computing storage drives and extended CXL devices. The optimization method according to embodiments of the present disclosure may be applicable to system optimization of CXL-PNM memory expansion.

The optimization method according to embodiments of the present disclosure may be applicable to CXL-PNM memory expansion devices.

Although specific terms are used above to describe various embodiments of the present disclosure, the description and accompanying drawings are considered to be illustrative rather than limiting in meaning to assist in understanding the present disclosure. Without departing from the broader scope of the present disclosure, it is apparent that those skilled in the art may make various modifications and changes (e.g., combining different features from different embodiments). Therefore, the scope of the present disclosure is not limited by detailed description and embodiments, but by the claims.

## Claims

1. An optimization method for deep learning, comprising:
loading (S110) a current batch of data from a processing near memory, PNM, memory (321) included in a PNM device (320) for deep learning training in each epoch of the deep learning training to obtain a current training result, wherein the current training result comprises at least one of a loss value or a confidence score corresponding to each piece of data included in the current batch of data; and
transferring (S120) the current training result to the PNM device (320),
wherein the current batch of data is prefetched by the PNM memory (321) from a PNM storage (322) that is included in the PNM device (320) or from an external storage that is external to the PNM device (320).

2. The optimization method of claim 1, further comprising:
before loading (S140) a next batch of data for the deep learning training, initiating (S130) a request to the PNM device (320) for generating a first sample set in the PNM memory (321) or for updating the first sample set in the PNM memory (321),
wherein the first sample set is generated or updated according to the current training result.

3. The optimization method of claim 2, further comprising:
loading (S140) the next batch of data from the PNM memory (321) to obtain a next training result, wherein the next training result comprises at least one of a loss value or a confidence score corresponding to each piece of data included in the next batch of data; and
transferring (S150) the next training result to the PNM device (320),
wherein the next batch of data comprises first sample data included in the first sample set, and second sample data that is prefetched by the PNM memory (321) from the PNM storage (322) or from the external storage, and
wherein the first sample data is more difficult to process than the second sample data.

4. The optimization method of claim 3, wherein proportions of the first sample data and the second sample data included in the next batch of data are determined according to at least one of the current training result, a batch size of the deep learning training, and a total number of epochs included in the deep learning training.

5. The optimization method of any one of claims 1 to 4, further comprising:
initiating a prefetch command to the PNM device (320) at preset time intervals,
wherein the prefetch command is used to command the PNM memory (321) to prefetch the data from the PNM storage (322) or from the external storage.

6. An optimization method for deep learning, the optimization method comprising:
receiving a prefetch command request from a host device (310); and
based on receiving the prefetch command request, prefetching (S210) data from a processing near memory, PNM, storage (322) included in a PNM device (320) or from an external storage that is external to the PNM device (320).

7. The optimization method of claim 6, further comprising:
based on receiving a sample request from the host device (310), generating or updating (S220) a first sample set in a PNM memory (321) according to a current training result, wherein the current training result comprises at least one of a loss value or a confidence score corresponding to each piece of data included in a current batch of data and is obtained by performing deep learning training with respect to the current batch of data.

8. The optimization method of claim 7, further comprising:
determining proportions of first sample data and second sample data in a next batch of data to be trained,
wherein the first sample data is harder to learn than the second sample data, and
wherein the second sample data is obtained from the prefetched data, and the first sample data is obtained from the first sample set.

9. The optimization method of claim 8, wherein the proportions are determined according to at least one of the current training result, a batch size of the deep learning training, and a total number of epochs included in the deep learning training.

10. The optimization method of claim 8 or 9, wherein the determining of the proportions comprises:
based on the current training result satisfying a first condition, decreasing an amount of the first sample data in the next batch of data to be trained, and increasing an amount of the second sample data in the next batch of data to be trained;
based on the current training result satisfying a second condition, increasing the amount of the first sample data in the next batch of data to be trained, and decreasing the amount of the second sample data in the next batch of data to be trained,
wherein the current training result satisfies the first condition based on the loss value for each piece of data included in the current batch of data being greater than a first threshold, or based on the confidence score for each piece of data included in the current batch of data being less than a second threshold, and
wherein the current training result satisfies the second condition based on the loss value for each piece of data included in the current batch of data being less than or equal to the first threshold, or based on the confidence score for each piece of data included in the current batch of data being greater than or equal to the second threshold.

11. The optimization method of any one of claims 8 to 10, further comprising:
before selecting the next batch of data, marking prefetched data in the PNM memory corresponding to the selected first sample data as being cleared.

12. An optimization method for deep learning, the optimization method comprising:
prefetching (S310) data from a processing near memory, PNM, storage (322) included in a PNM device (320) or an external storage that is external to the PNM device (320);
loading (S320) a current batch of data from a PNM memory (321) for deep learning training in each epoch of the deep learning training to obtain a current training result, wherein the current training result comprises at least one of a loss value or a confidence score corresponding to each piece of data included in the current batch of data; and
generating (S330) a first sample set in the PNM memory (321) or updating the first sample set in the PNM memory (321) according to the current training result.

13. The optimization method of claim 12, further comprising:
determining proportions of first sample data and second sample data included in a next batch of data to be trained,
wherein the second sample data is obtained from the prefetched data, and the first sample data is obtained from the first sample set.

14. The optimization method for deep learning of claim 13, wherein the proportions are determined according to at least one of the current training result, a batch size of the deep learning training, and a total number of epochs included in the deep learning training.

15. The optimization method for deep learning of claim 13 or 14, wherein the determining of the proportions comprises:
based on the current training result satisfying a first condition, decreasing an amount of the first sample data in the next batch of data to be trained, and increasing an amount of the second sample data in the next batch of data to be trained; and
based on the current training result satisfying a second condition, increasing the amount of the first sample data in the next batch of data to be trained, and decreasing the amount of the second sample data in the next batch of data to be trained,
wherein the current training result satisfies the first condition based on the loss value for each piece of data included in the current batch of data being greater than a first threshold, or based on the confidence score for each piece of data included in the current batch of data being less than a second threshold, and
wherein the current training result satisfies the second condition based on the loss value for each piece of data in the current batch of data being less than or equal to the first threshold, or based on the confidence score for each piece of data included in the current batch of data being greater than or equal to the second threshold.
